# EUROPÄISCHE PATENTSCHRIFT

(11) **EP 2 396 872 B1**
(45) Veröffentlichungstag und Bekanntmachung des Hinweises auf die Patenterteilung: **04.06.2014**
(21) Anmeldenummer: 10704789.6
(22) Anmeldetag: 05.02.2010
(51) Int. Cl.: H02K 15/00, H02K 17/16

(54) **KÄFIGLÄUFER**
CAGE-ROTOR
ROTOR A CAGE

(30) Priorität: 11.02.2009 DE 102009008440
(43) Veröffentlichungstag der Anmeldung: 21.12.2011
(73) Patentinhaber: Siemens Aktiengesellschaft, 80333 München (DE)
(72) Erfinder: BÜTTNER, Klaus, 97618 Hollstadt (DE); KURTH, Jens, 97618 Unsleben (DE); MÜLLER, Michael, 97688 Bad Kissingen (DE); WÖHNER, Norbert, 97618 Heustreu (DE)
(86) Internationale Anmeldenummer: PCT/EP2010/051441
(87) Internationale Veröffentlichungsnummer: WO 2010/100007

(56) Entgegenhaltungen:
- FR-A- 516 373
- JP-A- 9 074 726
- JP-A- 10 028 360

## Beschreibung

Die Erfindung betrifft einen Käfigläufer für eine Asynchronmaschine gemäß Oberbegriff des Anspruchs 1. Ferner betrifft die Erfindung ein Verfahren zur Herstellung eines Käfigläufers mit den Merkmalen des Oberbegriffs des Anspruchs 11.

Ein solcher Käfigläufer und ein solchen Verfahren sind jeweils aus der JP 09 07 4726 oder aus der JP 10028360 bekannt.

Ein Käfigläufer ist auch bekannt aus der DE 43 08 683 A1. Dieser Läufer umfasst ein Blechpaket mit Nuten, in die zunächst Kurzschlussstäbe aus Kupfer eingeschoben werden. Stirnseitig werden die Kupferstäbe durch Kurzschlussringe miteinander verbunden. Diese Kurzschlussringe werden durch ein Druckgussverfahren aus Aluminium hergestellt. Beim Vergießen der Kurzschlussringe wird gleichzeitig der in den Nuten gegenüber den eingesetzten Kupferstäben verbleibende Restquerschnitt mit Aluminium ausgegossen, so dass die Kurzschlussringe mit den in dem Restquerschnitt gebildeten druckgegossenen Stabteilen verbunden werden.

Da Kupfer im Vergleich zu Aluminium einen sehr viel höheren elektrischen Leitwert hat, kann auf diese Weise der Wirkungsgrad einer derartigen Asynchronmaschine gegenüber einer Asynchronmaschine mit einem vollständig aus Aluminiumdruckgussmaterial bestehenden Käfigläufer entscheidend verbessert werden.

Im Betrieb durchlaufen die Asynchronmaschine und damit auch der Käfigläufer von den elektrischen Verlusten innerhalb der Maschine abhängige thermische Zyklen. Hierdurch kommt es zu einer Wärmeausdehnung im Läufer, die aufgrund der unterschiedlichen Wärmeausdehnungunskoeffizienten von Aluminium und Kupfer bei einem derartigen Käfigläufer inhomogen ist. Hierdurch können sich die Kupferstäbe aus dem Aluminiumdruckgussmaterial der Kurzschlussringe lösen, wodurch schließlich der elektrische Übergangsleitwert zwischen den Kurzschlussringen und den Läuferstäben verschlechtert wird.

Ähnliche Wirkungsgrade wie bei den zuvor beschriebenen mittels Aluminiumdruckgussverfahren hergestellten Käfigläufern lassen sich mit einem Kupferdruckgussläufer realisieren. Da dieser komplett aus Kupfer besteht, treten die oben genannten Probleme hinsichtlich der unterschiedlichen Wärmeausdehnungskoeffizienten nicht auf. Jedoch ist der Kupferdruckgussprozess sehr aufwendig und stellt hohe Anforderungen an das Druckgusswerkzeug, da Kupfer für den Druckgussprozess auf Temperaturen von über 1.000 °C erwärmt werden muss. Bei Aluminium hingegen kann mit sehr viel niedrigeren Temperaturen beim Druckgießen gearbeitet werden. Ferner ist ein vollständig aus Kupfer bestehender Käfigläufer schwerer und damit bezüglich seines Anlaufverhaltens träger als der aus DE 43 08 683 A1 bekannte Käfigläufer, der Kurzschlussringe aus Aluminium aufweist.

Der Erfindung liegt die Aufgabe zugrunde, den elektrischen Wirkungsgrad bei einem aus **Aluminium und Kupfer** bestehenden mittels Druckgussverfahren hergestellten Kurzschlussläufer zu erhöhen.

Diese Aufgabe wird durch einen Käfigläufer für eine Asynchronmaschine mit den Merkmalen des Anspruchs 1 gelöst. Ferner wird die Aufgabe durch ein Verfahren zur Herstellung eines Käfigläufers für eine Asynchronmaschine den Verfahrensschritten nach Anspruch 11 gelöst.

Der Erfindung liegt die Erkenntnis zugrunde, dass die Verbindung zwischen den Leitern und den Kurzschlussringen dadurch extrem verbessert werden kann, dass das erste und zweite Material an geeigneten Stellen eine mischkristalline Verbindung eingehen. Die Kurzschlussstäbe ragen an beiden stirnseitigen Enden des Läuferblechpakets aus diesem heraus und in die gegossenen Kurzschlussringe hinein. Erfindungsgemäß wird die Erhöhung der Bindungskräfte zwischen Leiterenden und Kurzschlussringen dadurch erreicht, dass die Leiter derartig beschichtet werden, dass sowohl zwischen der Beschichtung und den Leitern eine Legierung - also eine mischkristalline Verbindung - entsteht als auch zwischen der Beschichtung und dem gegossenen ersten Material der Kurzschlussringe.

Vorteilhafte Ausgestaltungen der Erfindung sind in den abhängigen Ansprüchen angegeben.

So ist insbesondere eine Ausgestaltung der Erfindung vorteilhaft, bei der die mit den Leitern bestückten Nuten durch ein Druckgussverfahren mit dem ersten Material ausgefüllt sind, wobei die Kurzschlussringe mittels des Druckgussverfahrens hergestellt sind. Hierdurch werden die Kurzschlussstäbe hervcrragend in den Nuten fixiert. Wenn die Kurzschlussstäbe am radial nach innen gerichteten Nutgrund angeordnet werden, entstehen durch die in den Nuten aushärtende Schmelze Anlaufstäbe, die aufgrund ihres im Vergleich zu den Kurzschlussstäben niedrigeren elektrischen Leitwertes eine Verbesserung des Anlaufverhaltens der Asynchronmaschine bewirken.

Bei einer Erwärmung des Käfigläufers im Betrieb werden Temperaturen von ca. 150°C erreicht. Dadurch kommt es zu einer hohen Wärmeausdehnung in den durch das erste Material ausgegossenen Nutbereichen, insbesondere dann, wenn das erste Material Aluminium ist. Hierdurch kann sich der Übergang zwischen den Leitern und den Kurzschlussringen lösen, wodurch es zu einer Verschlechterung des elektrischen Leitwertes im Bereich des Übergangs zwischen den Kurzschlussringen und den Leitern kommt. Das im Druckgussverfahren aus Abdichtungsgründen axial zusammengepresste Läuferblechpaket kann sich axial wieder aufweiten, wenn die Verbindung zwischen den Leitern und den gegossenen Kurzschlussringen keine ausreichende Haltekraft aufbringen kann.

Durch die Beschichtung werden die Leiter durch maximal mögliche Bindungskräfte an den Druckguss gebunden. Entsprechend bleibt die Verbindung zwischen den Leitern und den Kurzschlussringen trotz unterschiedlicher thermischer Ausdehnungskoeffizienten des ersten und zweiten Materials auch dann stabil, wenn der Käfigläufer im Betrieb ausgeprägte thermische Zyklen durchfährt. Bei hohen Drehzahlen bewirken auch die auf den Läufer wirkenden Fliehkräfte teils heftige Spannungen in dem Leiter-Kurschlussring gebildet. Weiterhin wird durch die Legierung ein optimaler elektrischer Übergangsleitwert zwischen dem ersten und zweiten Material erzielt.

In der Ausgestaltung der Erfindung werden die Beschichtung und die erste Legierungsschicht durch elektrochemisches Galvanisieren erzeugt. Hierbei wird zunächst auf elektrochemischem Wege eine Schicht des Beschichtungsmaterials auf den Leitern abgeschieden. Zwischen dem zweiten Material der Leiter und dem Beschichtungsmaterial entsteht bei diesem Prozess die gewünschte mischkristalline Verbindung. Wenn anschließend das erste Material insbesondere mittels des Druckgussprozesses appliziert wird, schmilzt die Beschichtung auf den Leitern auf und geht mit der Druckschmelze ebenfalls eine mischkristalline Verbindung ein, so dass die zweite Legierungsschicht entsteht.

Beim Galvanisieren wird in weiterer vorteilhafter Ausgestaltung der Erfindung vor dem Beschichten eine Oxidschicht von den Leitern durch chemische Vorbehandlung der Leiter entfernt. Eine Oxidschicht hat isolierende elektrische Eigenschaften, so dass durch das Entfernen besagter Oxidschicht der Übergangswiderstand zwischen dem ersten und dem zweiten Material deutlich reduziert wird.

Bei der Erfindung ist das erste Material Aluminium und das zweite Material Kupfer. Hierdurch entsteht ein Hybridkäfigläufer, der aufgrund der Leiter aus Kupfer einen hervorragenden elektrischen Wirkungsgrad aufweist, sehr viel einfacher herzustellen ist als ein Kupferdruckgussläufer und im Vergleich zu diesem auch eine geringere Masse und damit ein geringeres Trägmoment aufweist, da dessen Kurzschlussringe aus dem vergleichsweise leichten Aluminium gefertigt sind. Insgesamt lässt sich feststellen, dass ein derartiger Hybridläufer einen besseren Wirkungsgrad aufweist als ein Kupferdruckgussläufer, der vollständig aus Kupfer hergestellt ist. Um einen derartigen Käfigläufer herzustellen, werden zunächst die Kupferleiter in die Nuten des Läuferblechpakets eingeschoben. Anschließend wird vorteilhafterweise mit einem Aluminiumdruckgussverfahren der Bereich der Nuten ausgefüllt, der nicht durch die Kupferleiter eingenommen wird. Gleichzeitig werden die Kurzschlussringe aus Aluminium vorteilhafterweise mittels des Druckgussverfahrens gefertigt.

Die Erfindung kennzeichnet sich dadurch aus, dass das Beschichtungsmaterial das erste Material ist. Beispielsweise wird hierbei bei einem Hybridläufer mit Kupferstäben und Aluminiumkurzschlussringen eine dünne Aluminiumschicht auf die Oberfläche der Kupferleiter aufgetragen. Dies erfolgt durch Galvanisieren. Bei diesem Beschichtungsprozess entsteht eine Legierung zwischen der Aluminiumbeschichtung und den Kupferleitern. Anschließend wird die Aluminiumdruckgussmasse in die Nuten eingespritzt, wobei gleichzeitig die Kurzschlussringe ausgegossen werden. Hierbei wird die Aluminiumbeschichtung an der Oberfläche der Leiter aufgeschmolzen und geht mit der Aluminiumschmelze eine mischkristalline Verbindung ein. Dabei wird schließlich die zweite Legierungsschicht gebildet. Insbesondere im Bereich der Enden der Kupferstäbe, die aus dem Läuferblechpaket heraus und in die Kurzschlussringe hineinragen, entsteht eine äußerst stabile Verbindung zwischen den beiden Materialien, so dass die Festigkeit bezüglich thermischer Zyklen und im Betrieb auftretenden Fliehkräften erhöht wird. Hierbei entsteht eine nahezu ideale elektrische und mechanische Verbindung zwischen den Kurzschlussringen aus Aluminium und den Kupferstäben.

Bei dem Gussverfahren kann es zu signifikanten chemischen Reaktionen zwischen den beschichteten Leitern und der Schmelze kommen. Um einen zu großen Abtrag von den Leitern durch die mit den Leitern in Berührung stehende Schmelze des ersten Materials zu vermeiden, können in vorteilhafter Ausgestaltung der Erfindung die Beschichtung und die Legierungsschichten ausschließlich an aus dem Läuferblechpaket heraus und in die Kurzschlussringe hereinragenden Endbereichen der Leiter angeordnet werden. Die besagten Endbereiche stellen die kritische Verbindungsstelle zwischen den Leitern und den Kurzschlussringen dar. Entsprechend ist hier die starke kristalline Verbindung besonders wichtig. Auch ist vor allem in diesem Endbereich jedes Leiters dem elektrischen übergangsleitwert zwischen den beiden Materialien eine besondere Bedeutung zuzumessen, da hier der Stromfluss von den Leitern auf die Kurzschlussringe übergeht. Hingegen ist auch bei einem mittels Druckguss hergestellten Läufer eine starke kristalline Verbindung der Leiter in den Bereichen innerhalb der Nut weniger erforderlich, da hier kein Stromfluss vom ersten zum zweiten Material bzw. umgekehrt zu erwarten ist.

In der Ausführung einfacher ist bei einer Beschichtung durch Galvanisieren einer Ausgestaltung der Erfindung, bei der die Beschichtung und die Legierungsschichten die Leiter vollständig umhüllen.

Denkbar und vorteilhaft ist aber auch eine Ausgestaltung der Erfindung, bei der eine Fläche der Leiter, die innerhalb der Nuten dem druckgegossenen ersten Material zugewandt ist, keine Beschichtung aufweist. Hierbei wird der Abtrag von Material an der der Schmelze zugewandten Fläche der Leiter verhindert. Anstelle einer fehlenden Beschichtung ist es auch denkbar, an der besagten Fläche eine aufschmelzresistente Beschichtung vorzusehen. So könnten beispielsweise zunächst die Leiter komplett galvanisiert und damit beschichtet werden mit einem Beschichtungsmaterial, welches die gewünschten Legierungsschichten hervorruft. Anschließend könnte ausschließlich die besagte Fläche der Leiter, die innerhalb der Nuten dem druckgegossenen ersten Material zugewandt ist, mit einer entsprechenden aufschmelzresistenten Passivierungsschicht versehen werden.

Die Verbindung zwischen den Leitern und den Kurzschlussringen kann in weiterer vorteilhafter Ausgestaltung der Erfindung dadurch weiter verstärkt werden, dass die Leiter an beiden Enden jeweils einen aus dem Läuferblechpaket heraus und in die Kurzschlussringe hereinragenden Endbereich mit Formschlussmitteln zur Erzeugung eines Formschlusses zwischen den Leitern und den gegossenen Kurzschlussringen aufweisen. Durch diese Formschlussmittel in den Endbereichen der Leiter wird die Verbindung zwischen den Leitern und den Kurzschlussringen weiter gestärkt. Die an den Enden herausragenden Leiter sind durch die Formschlussmittel mit den Kurzschlussringen axial verspannt. Damit werden die Leiter je nach Temperatur und je nach Wärmeausdehnungskoeffizienten der Leiter und der Kurzschlussringe auf Zug oder Druck beansprucht. Der Kurzschlussläufer ist hierbei so auszulegen, dass die Beanspruchung stets im elastischen Bereich bleibt. Durch die verwendeten Formschlussmittel wird ein Verschieben der Leiter innerhalb der Kurzschlussringe oder ein Herausziehen der Leiter aus den Kurzschlussringen verhindert, wodurch ein Abriss der Fügestelle zwischen den beiden Materialien vermieden werden kann. Als Formschlussmittel sind beispielsweise Durchgangslöcher in den Endbereichen der Leiter vorstellbar, die von der Schmelze während des Gussprozesses ausgefüllt werden. Anstelle eines Durchgangslochs sind als Formschlussmittel auch Aussparungen in den Endbereichen, Verjüngungen der Leiter innerhalb der Endbereiche, Kerben, Rändelungen der Endbereiche, Verwindungen der Leiter in den Endbereichen oder eine Aufspaltung der Leiter in den Endbereichen vorstellbar.

Aufbauend auf einer der zuvor beschriebenen Ausführungsformen des erfindungsgemäßen Käfigläufers lässt sich mit einem entsprechenden Ständer auf sehr einfache Weise eine Asynchronmaschine realisieren, die auch unter thermischen Belastungen und bei hohen Drehzahlen stets einen guten elektrischen Wirkungsgrad aufweist und sich als äußerst robust darstellt.

Im Folgenden wird die Erfindung anhand der in den Figuren dargestellten Ausführungsbeispiele näher beschrieben und erläutert. Es zeigen:
- FIG 1: eine Ausführung eines Käfigläufers einer Asynchronmaschine in Hybridbauweise,
- FIG 2: einen Schnitt durch den Käfigläufer,
- FIG 3: einen Schnitt durch eine Grenzfläche zwischen einem beschichteten Leiter und dem druckgegossenen ersten Material,
- FIG 4: einen weiteren Ausführung des Käfigläufer in Hybridbauweise in Schnittdarstellung mit Leitern mit Formschlussmitteln im Bereich der Kurzschlussringe,
- FIG 5: eine Schnitt durch Nuten mit Leitern, die eine beschichtungsfreie Fläche aufweisen und
- FIG 6: eine Asynchronmaschine mit einer Ausführungsform des Käfigläufers.

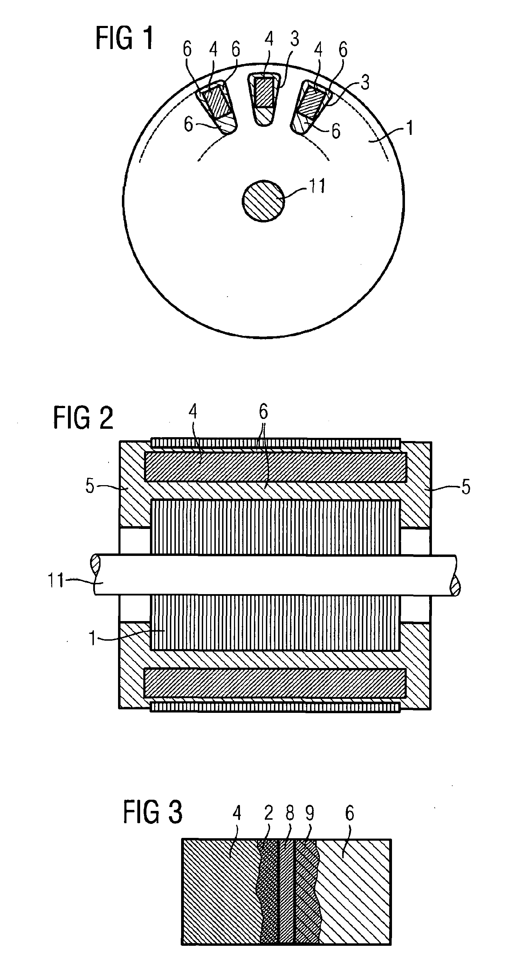

FIG 1 zeigt eine Ausführung eines Käfigläufers einer Asynchronmaschine in Hybridbauweise. Dargestellt ist ein Läuferblechpaket 1 der Asynchronmaschine, welches auf einer Welle 11 aufgeschrumpft ist. Bei der Herstellung des Käfigläufers werden zunächst Leiter 4, die vorzugsweise aus Kupfer ausgeführt sind, in Nuten 3 des Läuferblechpakets 1 eingeschoben. Wie zu erkennen ist, ist der Querschnitt der Leiter 4 kleiner als die Querschnittsfläche der Nuten 3. Somit bleibt nach dem Einlegen der als Kupferstäbe ausgeführten Leiter 4 noch ein Restquerschnitt der Nut 3 frei.

Zur Herstellung des Kurzschlussläufers wird im nächsten Schritt ein Druckgussverfahren angewandt. Bei diesem Verfahren werden Kurzschlussringe, die stirnseitig mit den Kupferstäben im Kontakt stehen gefertigt und gleichzeitig der noch freie Raum der Nuten 3 mit einer Schmelze ausgefüllt. Innerhalb der Nuten entstehen nun nach dem Aushärten der Aluminiumschmelze in dem verbliebenen Restquerschnitt Aluminiumstabteile 6, die die Kupferstäbe in ihrer Lage fixieren und direkt an diese angrenzen. Diese Aluminiumstabteile 6 können vorteilhafter Weise auch als Anlaufstäbe der Asynchronmaschine verwendet werden, da sie gegenüber den Kupferleitern einen geringeren elektrischen Leitwert aufweisen. Insbesondere dann, wenn die Aluminiumstabteile 6 anders als in der Darstellung im radial außen gerichteten Bereich der Nut angeordnet sind, haben diese einen positiven Effekt auf dem Drehmomentverlauf der Asynchronmaschine.

Durch den hybriden Aufbau, d.h. durch die Verwendung von Leitern 4 aus Kupfer und Kurzschlussringen aus Aluminium lässt sich ein Käfigläufer mit besonders gutem elektrischen Wirkungsgrad herstellen. Dies ist zum Einen auf die gute Leitfähigkeit von Kupfer zurückzuführen und zum Anderen auf das vergleichsweise geringe Gewicht der aus Aluminium gefertigten Kurzschlussringe, was eine entsprechende relative niedrige träge Masse zur Folge hat.

FIG 2 zeigt einen Schnitt durch den Käfigläufer, bei dem neben dem Läuferblechpaket 1 die von der Aluminiumschmelze umgebenen und in die Nuten 3 eingelegten Leiter 4 zu erkennen sind. An ihren stirnseitigen Enden tauchen diese Leiter 4 in die aus Aluminiumdruckguss hergestellten Kurzschlussringe 5 ein. Durch Temperaturspiele, die der Käfigläufer im Betrieb der Maschine durchläuft, kann es insbesondere in den Endbereichen zu einer Ablösung der Leiter 4 von den Kurzschlussringen 5 kommen. Dies ist insbesondere durch die unterschiedlichen Wärmeausdehnungskoeffizienten der verwendeten Materialien Kupfer und Aluminium zu erklären. Daher ist es bei einem derartigen Hybridläufer besonders wichtig, eine stabile Verbindung zwischen den beiden Materialien Kupfer und Aluminium insbesondere im Bereich der Kurzschlussringe 5 zu gewährleisten.

FIG 3 zeigt einen Schnitt durch eine Grenzfläche zwischen einem beschichteten Leiter 4 und dem druckgegossenen ersten Material der Aluminiumstabteile 6. Eine solche Grenzfläche entsteht durch ein Ausführung der erfindungsgemäßen Beschichtung der Leiter 4 vor dem Druckgussprozess. Auch hier sei angenommen, dass das erste Material Aluminium ist und das zweite Material, aus dem die Leiter 4 gefertigt sind, Kupfer. Die Kupferleiter werden beispielsweise durch einen Galvanisierungsprozess mit einer Beschichtung 8 versehen. Zuvor werden die Leiter 4 chemisch behandelt, um eine Kupferoxidschicht an deren Oberfläche, die eine Verschlechterung des elektrischen Leitwertes zufolge hat, zu entfernen. Anschließend werden die Leiter 4 in ein Galvanisierungsbad getaucht, wo ein geeignetes Beschichtungsmaterial aufgetragen wird. Hierbei kann es sich beispielsweise um das erste Material, also Aluminium, handeln. Durch dieses Beschichtungsverfahren entsteht zwischen der Beschichtung 8 und dem Kupfer der Leiter 4 eine Übergangszone, die im Folgenden als erste Legierungsschicht 2 bezeichnet wird. Innerhalb der ersten Legierungsschicht 2 existiert ein mischkristalliner Aufbau, durch den gewährleistet ist, dass die Beschichtung 8 extrem stark mit dem Kupfer der Leiter 4 verbunden ist.

Im weiteren Verfahrensverlauf werden die so beschichteten Leiter 4, die in die Nuten 3 des Läuferblechpaketes 1 eingeschoben sind, dem Aluminiumdruckgussprozess ausgesetzt. Sobald die Schmelze an die Leiter 4 herantritt, wird durch die Wärme ein Teil der Beschichtungszone 8 an der Oberfläche aufgeschmolzen. Es bildet sich eine zweite Legierungsschicht 9, bei der sich eine mischkristalline Phase aus dem Beschichtungsmaterial und dem Aludruckguss einstellt. Diese sorgt schließlich dafür, dass die Aluminiumstabteile 6 extrem stark an der Beschichtungszone 8 anhaften. Auf diese Art und Weise wird verhindert, dass sich die Aluminiumdruckgussmasse von den Leitern 4 beim Durchlaufen thermischer Zyklen des Käfigläufers oder unter extrem hohen Drehzahlen ablöst.

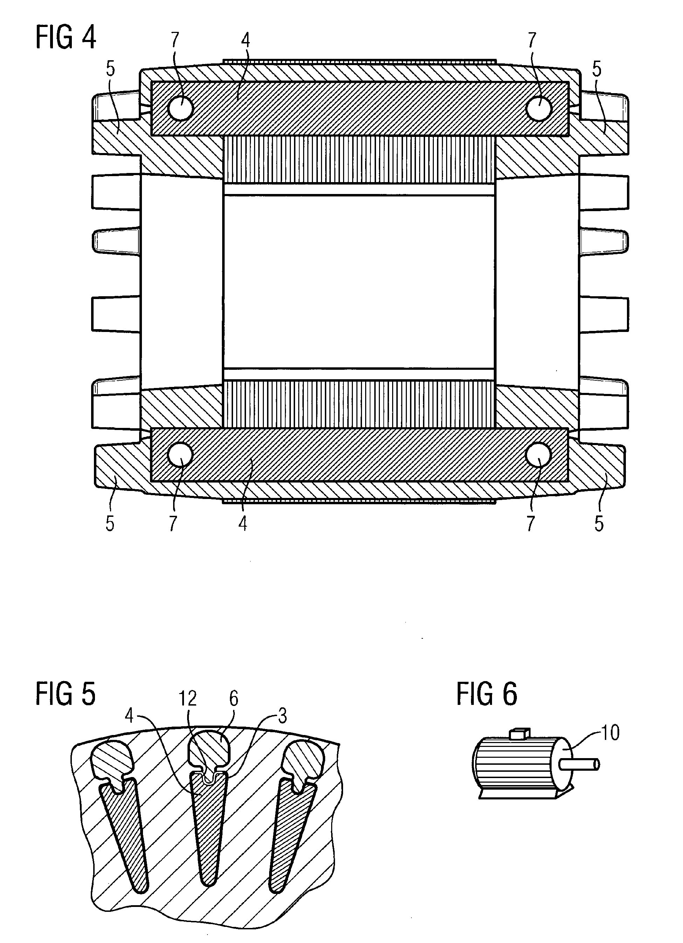

FIG 4 zeigt eine weitere Ausführung des Käfigläufers in Hybridbauweise in Schnittdarstellung mit Leitern 4 mit Formschlussmitteln 7 im Bereich der Kurzschlussringe 5. Die Formschlussmittel 7 der Leiter 4 sind als Durchgangslöcher ausgeführt. Sobald das mit den Leitern 4 bestückte Läuferblechpaket dem Aluminiumdruckgussverfahren ausgesetzt wird, werden die Formschlussmittel 7 mit Aluminiumschmelze durchsetzt. Dies hat zur Folge, dass zusätzlich eine formschlüssige Verbindung dafür sorgt, dass die Leiter 4 im Bereich der Kurzschlussringe 5 während der thermischen Zyklen in Verbindung bleiben. Die dargestellten Formschlussmittel 7 unterstützen also noch die Wirkung der erfindungsgemäßen Beschichtung dahingehend, dass ein Abriss der stirnseitigen Leiterenden aus den druckgegossenen Kurzschlussringen 5 verhindert wird.

FIG 5 zeigt einen Schnitt durch Nuten 3 mit Leitern 4, die eine beschichtungsfreie Fläche 12 aufweisen. Bei dem hier dargestellten Käfigläufer handelt es sich um einen Hybridläufer mit Aluminiumstabteilen 6, die die Funktion von Anlaufstäben erfüllen. In die Nuten 3 werden zunächst Leiter 4 eingelegt, die direkt am radial innen gerichteten Nutgrund anliegen. Bei dem Aluminiumdruckgussprozess wird der freibleibende Restquerschnitt mit Aluminiumschmelze ausgefüllt, wobei sich der Restquerschnitt im radial außen gerichteten Bereich befindet. Auf diese Art und Weise ist zum Einen gewährleistet, dass nur eine Fläche der Leiter 4 mit dem Aluminiumdruckgussmaterial in Berührung steht. Zum Anderen liegen die Aluminiumstabteile 6 radial außen, was bei einem mit Kupferstäben als Leiter 4 ausgeführten Käfigläufer aufgrund des niedrigeren Leitwertes von Aluminium zu einem besseren Anlaufverhalten führt. Außerdem drücken die außen liegenden Anlaufstäbe die Leiter 4 derartig gegen den Nutgrund, dass die Leiter 4 sehr gut im Läuferblechpaket fixiert sind.

Je nach Beschichtungsmaterial kann es bei beschichteten Leitern 4 während des Druckgussprozesses zu einem nicht zu vernachlässigenden Materialabtrag vom Leiter 4 kommen. Um dies zu verhindern, ist die dem Aluminiumstabteil 6 zugewandte Seite der Leiter 4 beschichtungsfrei ausgeführt. Die Leiter 4 werden daher in dem in die Nuten 3 eingelegten Bereich nicht dem besagten Materialabtrag ausgesetzt. Lediglich die aus dem Läuferblechpaket herausragenden Endbereiche der Leiter 4 sind vollständig beschichtet, um hier die gewünschte starke Verbindung zu den Kurzschlussringen zu erzeugen. Hingegen ist die mischkristalline Verbindung zwischen dem Leiter 4 und den Aluminiumstabteilen 6 im Bereich der Nuten nicht erforderlich.

FIG 6 zeigt eine Asynchronmaschine 10 mit einem Käfigläufer nach einer der zuvor beschriebenen Ausführungsform. Eine derartige Asynchronmaschine zeichnet sich durch einen hohen elektrischen Wirkungsgrad aus und ist im Vergleich zu einer Asynchronmaschine mit einem Kupferdruckgussläufer sehr viel einfacher und kostengünstiger herzustellen. Darüber hinaus zeigt die dargestellte Asynchronmaschine 10 im Vergleich zu einer Asynchronmaschine mit Kupferdruckgussläufer ein verbessertes dynamisches Verhalten, da der Hybridläufer der dargestellten Asynchronmaschine ein sehr viel geringeres Trägheitsmoment aufweist.

## Patentansprüche

1. Käfigläufer für eine Asynchronmaschine, wobei der Käfigläufer
- ein Läuferblechpaket (1) mit Nuten (3),
- stirnseitig an das Läuferblechpaket angegossene Kurzschlussringe (5) eines ersten Materials und
- in den Nuten angeordnete Leiter (4) eines zweiten Materials mit einem höheren spezifischen elektrischen Leitwert als der des ersten Materials umfasst,
wobei die Leiter (4) an ihrer Oberfläche eine Beschichtung (8) aus einem Beschichtungsmaterial aufweisen, die über eine erste Legierungsschicht (2) aus dem zweiten Material und dem Beschichtungsmaterial an das zweite Material der Leiter (4) angrenzt und über eine zweite Legierungsschicht (9) aus dem ersten Material und dem Beschichtungsmaterial an das gegossene erste Material angrenzt und das erste Material Aluminium und das zweite Material Kupfer ist, **wobei das Beschichtungsmaterial das erste Material ist,**
**dadurch gekennzeichnet , dass** die Beschichtung (8) und die erste Legierungsschicht (2) durch elektrochemisches Galvanisieren erzeugt sind.

2. Käfigläufer nach Anspruch 1,
wobei die Beschichtung (8) auf den Leitern (4) aufgeschmolzen ist.

3. Käfigläufer nach Anspruch 1 oder 2,
wobei die mit den Leitern (4) bestückten Nuten (2) durch ein Druckgussverfahren mit dem ersten Material ausgefüllt sind, wobei die Kurzschlussringe mittels des Druckgussverfahrens hergestellt sind.

4. Käfigläufer nach einem der vorhergehenden Ansprüche,
wobei die Beschichtung (8) und die Legierungsschichten (2,9) ausschließlich an aus dem Läuferblechpaket (1) heraus und in die Kurzschlussringe (5) hereinragenden Endbereichen der Leiter (4) angeordnet sind.

5. Käfigläufer nach einem der Ansprüche 1 bis 3,
wobei die Beschichtung (8) und die Legierungsschichten (2,9) die Leiter (4) vollständig umhüllen.

6. Käfigläufer nach Anspruch 3, wobei die eine Fläche der Leiter (4), die innerhalb der Nuten dem druckgegossenen ersten Material zugewandt ist, keine Beschichtung (8) aufweist.

7. Käfigläufer nach einem der vorhergehenden Ansprüche, wobei die Leiter (4) an beiden Enden jeweils einen aus dem Läuferblechpaket heraus und in die Kurzschlussringe (5) hereinragenden Endbereich mit Formschlussmitteln (7) zur Erzeugung eines Formschlusses zwischen den Leitern (4) und den gegossenen Kurzschlussringen (5) aufweisen.

8. Asynchronmaschine (10) mit einem Ständer mit einer Ständerwicklung und einem Käfigläufer nach einem der vorhergehenden Ansprüche.

9. Verfahren zur Herstellung eines Käfigläufers für eine Asynchronmaschine mit folgenden Verfahrensschritten:
- Einlegen von Leitern (4) eines zweiten Materials in Nuten (3) eines Läuferblechpaketes (1) und
- stirnseitiges Angießen von Kurzschlussringen (5) aus einem ersten Material mit einem geringeren spezifischen elektrischen Leitwert als der des zweiten Materials an das Läuferblechpaket,
wobei die Leiter (4) an ihrer Oberfläche derart mit einer Beschichtung (8) aus einem Beschichtungsmaterial versehen werden, dass eine erste Legierungsschicht (2) aus dem zweiten Material und dem Beschichtungsmaterial zwischen dem zweiten Material der Leiter (4) und der Beschichtung (8) entsteht, wobei das Beschichtungsmaterial derart beschaffen ist, dass beim Gussverfahren eine zweite Legierungsschicht (9) aus dem ersten Material und dem Beschichtungsmaterial zwischen der Beschichtung (8) und dem gegossenen erste Material entsteht, und wobei für das erste Material Aluminium und für das zweite Material Kupfer verwendet wird, **wobei als Beschichtungsmaterial das erste Material verwendet wird,**
**dadurch gekennzeichnet , dass** die Beschichtung (8) und die erste Legierungsschicht (2) durch elektrochemisches Galvanisieren erzeugt werden.

10. Verfahren nach Anspruch **9**,
wobei die Beschichtung (8) auf den Leitern (4) beim Gussverfahren aufschmilzt.

11. Verfahren nach Anspruch **9** oder **10**,
wobei die mit den Leitern (4) bestückten Nuten (3) durch ein Druckgussverfahren mit dem ersten Material aufgefüllt werden.

12. Verfahren nach einem der Ansprüche **9** bis **11**,
wobei ausschließlich aus dem Läuferblechpaket heraus und in die Kurzschlussringe (5) hereinragende Endbereiche der Leiter (4) mit der Beschichtung (8) und der ersten Legierungsschicht (2) versehen werden.

13. Verfahren nach einem der Ansprüche **9** bis **12**,
wobei die Leiter (4) vollständig mit der Beschichtung (8) und der ersten Legierungsschicht (2) versehen werden.

14. Verfahren nach Anspruch **11** und insbesondere einem der Ansprüche **9** bis **10**,
wobei die eine Fläche der Leiter (4), die innerhalb der Nuten dem druckgegossenen ersten Material zugewandt ist, nicht mit einer Beschichtung (8) versehen wird.

15. Verfahren nach einem der Ansprüche **9** bis **14**,
zwischen den Leitern (4) und den gegossenen Kurzschlussringen (5) ein Formschluss an beiden aus dem Läuferblechpaket (1) heraus und in die Kurzschlussringe (5) hereinragenden Endbereichen der Leiter (4) erzeugt wird.

16. Verfahren nach einem der Ansprüche **9** bis **15**,
wobei vor dem Beschichten eine Oxidschicht von den Leitern (4) durch chemische Vorbehandlung der Leiter (4) entfernt wird.

## Claims

1. Squirrel-cage rotor for an asynchronous machine, wherein the squirrel-cage rotor comprises
- a laminated rotor core (1) with slots (3),
- short-circuiting rings (5) which are cast onto the end face of the laminated rotor core and are made of a first material, and
- conductors (4) which are arranged in the slots and are made of a second material having a specific electrical conductivity which is higher than that of the first material,
wherein the surface of the conductors (4) is provided with a coating (8) which is made of a coating material, adjoins the second material of the conductors (4) via a first alloy layer (2) made of the second material and the coating material, and adjoins the cast, first material via a second alloy layer (9) made of the first material and the coating material, and the first material is aluminum and the second material is copper, wherein the coating material is the first material, **characterized in that**
the coating (8) and the first alloy layer (2) are produced by electrochemical galvanization.

2. Squirrel-cage rotor according to Claim 1,
wherein the coating (8) is fused onto the conductors (4).

3. Squirrel-cage rotor according to Claim 1 or 2,
wherein the slots (2) equipped with the conductors (4) are filled with the first material by a die-casting process, wherein the short-circuiting rings are produced by means of the die-casting process.

4. Squirrel-cage rotor according to one of the preceding claims, wherein the coating (8) and the alloy layers (2, 9) are arranged exclusively on end regions of the conductors (4) which protrude out of the laminated rotor core (1) and into the short-circuiting rings (5).

5. Squirrel-cage rotor according to one of Claims 1 to 3, wherein the coating (8) and the alloy layers (2, 9) envelop the conductors (4) completely.

6. Squirrel-cage rotor according to Claim 3,
wherein one surface of the conductors (4), which faces toward the die-cast, first material within the slots, has no coating (8).

7. Squirrel-cage rotor according to one of the preceding claims,
wherein each end of the conductors (4) is provided with an end region which protrudes out of the laminated rotor core and into the short-circuiting rings (5) and has interlocking means (7) for producing an interlock between the conductors (4) and the cast short-circuiting rings (5).

8. Asynchronous machine (10) comprising a stator with a stator winding and a squirrel-cage rotor according to one of the preceding claims.

9. Process for producing a squirrel-cage rotor for an asynchronous machine, comprising the following process steps:
- conductors (4) made of a second material are inserted into slots (3) of a laminated rotor core (1), and
- short-circuiting rings (5) made of a first material having a specific electrical conductivity which is lower than that of the second material are cast onto the end face of the laminated rotor core, wherein the surface of the conductors (4) is provided with a coating (8) made of a coating material in such a manner that a first alloy layer (2) made of the second material and the coating material is produced between the second material of the conductors (4) and the coating (8), wherein the coating material is constituted in such a manner that, during the casting process, a second alloy layer (9) made of the first material and the coating material is produced between the coating (8) and the cast, first material, and wherein aluminum is used for the first material and copper is used for the second material, wherein the first material is used as the coating material,
**characterized in that**
the coating (8) and the first alloy layer (2) are produced by electrochemical galvanization.

10. Process according to Claim 9,
wherein the coating (8) fuses onto the conductors (4) during the casting process.

11. Process according to Claim 9 or 10,
wherein the slots (3) equipped with the conductors (4) are filled with the first material by a die-casting process.

12. Process according to one of Claims 9 to 11,
wherein exclusively end regions of the conductors (4) which protrude out of the laminated rotor core and into the short-circuiting rings (5) are provided with the coating (8) and the first alloy layer (2).

13. Process according to one of Claims 9 to 12,
wherein the conductors (4) are provided completely with the coating (8) and the first alloy layer (2).

14. Process according to Claim 11 and in particular one of Claims 9 to 10,
wherein one surface of the conductors (4), which faces toward the die-cast, first material within the slots, is not provided with a coating (8).

15. Process according to one of Claims 9 to 14,
wherein an interlock is produced between the conductors (4) and the cast short-circuiting rings (5) at both end regions of the conductors (4) which protrude out of the laminated rotor core (1) and into the short-circuiting rings (5).

16. Process according to one of Claims 9 to 15,
wherein, before coating, an oxide layer is removed from the conductors (4) by chemical pretreatment of the conductors (4).

## Revendications

1. Rotor à cage pour un moteur asynchrone, le rotor à cage comprenant
- un paquet ( 1 ) de tôles rotoriques ayant des encoches ( 3 ),
- des anneaux ( 5 ) de court-circuit en un premier matériau coulé du côté frontal sur le paquet de tôles rotoriques, et
- des conducteurs ( 4 ) disposés dans les encoches et en un deuxième matériau ayant une conductivité électrique spécifique plus grande que le premier matériau,
dans lequel les conducteurs ont, sur leur surface, un revêtement ( 8 ) en un matériau de revêtement qui, par une première couche ( 2 ) d'alliage en le deuxième matériau et en le matériau de revêtement, est voisin du deuxième matériau des conducteurs ( 4 ) et, par une deuxième couche ( 9 ) d'alliage en le premier matériau et en le matériau de revêtement, est voisin du premier matériau coulé et le premier matériau est de l'aluminium et le deuxième matériau est du cuivre, le matériau de revêtement étant le premier matériau,
**caractérisé en ce que** le revêtement ( 8 ) et la première couche ( 2 ) d'alliage sont produits par galvanisation électrochimique.

2. Rotor à cage suivant la revendication 1,
dans lequel le revêtement ( 8 ) est appliqué par fusion sur les conducteurs ( 4 ).

3. Rotor à cage suivant la revendication 1 ou 2,
dans lequel les encoches ( 2 ) munies des conducteurs ( 4 ) sont remplies du premier matériau par un procédé de coulée sous pression, les anneaux de court-circuit étant produits au moyen du procédé de coulée sous pression.

4. Rotor à cage suivant l'une des revendications précédentes,
dans lequel le revêtement ( 8 ) et les couches ( 2, 9 ) d'alliage sont disposés exclusivement sur des parties d'extrémité des conducteurs ( 4 ) sortant du paquet ( 1 ) de tôles rotoriques et pénétrant dans les anneaux ( 5 ) de court-circuit.

5. Rotor à cage suivant l'une des revendications 1 à 3,
dans lequel le revêtement ( 8 ) et les couches ( 2, 9 ) d'alliage enrobent complètement les conducteurs ( 4 ).

6. Rotor à cage suivant la revendication 3,
dans lequel la surface des conducteurs ( 4 ) qui, à l'intérieur des encoches, est tournée vers le premier matériau coulé sous pression, n'a pas de revêtement ( 8 ).

7. Rotor à cage suivant l'une des revendications précédentes,
dans lequel les conducteurs ( 4 ) ont, aux deux extrémités, respectivement une partie d'extrémité sortant du paquet de tôles rotoriques, pénétrant dans les anneaux ( 5 ) de court-circuit et ayant des moyens ( 7 ) à complémentarité de forme pour la production d'une complémentarité de forme entre les conducteurs ( 4 ) et les anneaux ( 5 ) de court-circuit coulés.

8. Moteur ( 10 ) à synchrone comprenant un stator ayant un enroulement statorique et un rotor à cage suivant l'une des revendications précédentes.

9. Procédé de fabrication d'un rotor à cage pour un moteur asynchrone ayant les stades de procédés suivants :
- on met des conducteurs ( 4 ) en un deuxième matériau dans des encoches ( 3 ) d'un paquet ( 1 ) de tôles rotoriques, et
- on coule du côté frontal des anneaux ( 5 ) de court-circuit en un premier matériau ayant une conductivité électrique spécifique plus petite que celle du deuxième matériau sur le paquet de tôles rotoriques,
dans lequel les conducteurs ( 4 ) sont munis sur leur surface d'un revêtement ( 8 ) en un matériau de revêtement de manière à créer une premier couche ( 2 ) d'alliage en le deuxième matériau et en le matériau de revêtement, entre le deuxième matériau des conducteurs ( 4 ) et le revêtement ( 8 ), le matériau de revêtement étant tel que, dans le procédé de coulée, il se créé une deuxième couche ( 9 ) d'alliage en le premier matériau et le matériau de revêtement entre le revêtement ( 8 ) et en le premier matériau coulé, et dans lequel on utilise pour le premier matériau de l'aluminium et pour le deuxième matériau du cuivre, le premier matériau étant utilisé comme matériau de revêtement,
**caractérisé en ce que** l'on produit le revêtement ( 8 ) et la première couche ( 2 ) d'alliage par galvanisation électrochimique.

10. Procédé suivant la revendication 9,
dans lequel on applique le revêtement ( 8 ) sur les conducteurs ( 4 ) par fusion lors du procédé de coulée.

11. Procédé suivant la revendication 9 ou 10,
dans lequel on remplit du premier matériau les encoches ( 3 ) munies des conducteurs ( 4 ) par un procédé de coulée sous pression.

12. Procédé suivant l'une des revendications 9 à 11,
dans lequel on munit du revêtement ( 8 ) et de la première couche ( 2 ) d'alliage exclusivement des parties des extrémités des conducteurs ( 4 ) sortant du paquet de tôles rotorique et pénétrant dans les anneaux ( 5 ) de court-circuit.

13. Procédé suivant l'une des revendications 9 à 12,
dans lequel on munit les conducteurs ( 4 ) complètement du revêtement ( 8 ) et de la première couche ( 2 ) d'alliage.

14. Procédé suivant la revendication 11 et notamment l'une des revendications 9 à 10,
dans lequel on ne munit pas d'un revêtement ( 8 ) la surface des conducteurs ( 4 ) qui, à l'intérieur des encoches, est tournée vers le premier matériau coulé sous pression.

15. Procédé suivant l'une des revendications 9 à 14,
dans lequel on produit, entre les conducteurs ( 4 ) et les anneaux ( 5 ) de court-circuit coulés, une complémentarité de forme sur les deux parties d'extrémité des conducteurs ( 4 ) sortant du paquet ( 1 ) de tôles rotorique et pénétrant dans les anneaux ( 5 ) de court-circuit.

16. Procédé suivant l'une des revendications 9 à 15,
dans lequel on élimine avant le revêtement une couche d'oxyde des conducteurs ( 4 ) par traitement chimique préalable des conducteurs ( 4 ).
